# EUROPEAN PATENT APPLICATION

(11) **EP 2 698 840 A1**
(43) Date of publication of application: **19.02.2014**
(21) Application number: 13161447.1
(22) Date of filing: 27.03.2013
(51) Int. Cl.: H01M 2/10, H01M 2/12

(54) **Battery module**

(30) Priority: 13.08.2012 US 201261682619 P; 15.03.2013 US 201313837307
(71) Applicant: Samsung SDI Co., Ltd., Gyeonggi-do (KR)
(72) Inventor: Yoon, Jong-Wook, Gyeonggi-do (KR); Choi, Hong-Keun, Gyeonggi-do (KR)
(74) Representative: Mounteney, Simon James

(57) **Abstract**

There is provided a sub cover (120) for a battery module (10) capable of enhancing insulation property and safety. The sub cover allows the battery cells and the top cover (130) to be spaced apart from each other.

## Description

### BACKGROUND

### 1. Field

An aspect of the present invention relates to a sub cover for a battery module, and more particularly, to a battery module comprising said sub cover capable of enhancing insulation property and safety.

### 2. Description of the Related Art

A high-power battery module using a non-aqueous electrolyte with high energy density has recently been developed. The high-power battery module is configured as a large-capacity battery module manufactured by connecting a plurality of battery cells in series so as to be used for driving devices, e.g., notebook computers, electric vehicles and the like, which require high power.

A battery cell includes an electrode assembly and an electrolyte, and the electrode assembly is composed of positive and negative electrode plates. The battery cell can generate energy by an electrochemical reaction of the electrode plates and the electrolyte. In this case, gas and heat may be generated from the battery cell by a side reaction of the electrochemical reaction.

### SUMMARY

The present invention provides a sub cover for use in a battery module as claimed in any of claims of 1 to 11 and a battery module comprising said sub cover as claimed in any of claims 12 to 15. The sub cover of the present invention as claimed in any of claims 1 to 11 is used in the embodiments relating to a battery module discussed below.

Embodiments provide a battery module in which a sub cover that allows a plurality of battery cells and a housing accommodating the battery cells to be space apart from each other at a predetermined interval is interposed between tops of the battery cells and the housing, so that it is possible to enhance the insulation property between the battery cells and the housing and the safety of the battery module.

Embodiments also provide a battery module in which a sub cover is interposed between tops of a plurality of battery cells and a housing accommodating the battery cells, so that it is possible to easily discharge gas or heat generated from the battery cells without using a conventional vent cover, thereby enhancing the safety and durability of the battery module.

According to an aspect of the present invention, a battery module including: two or more battery cells arranged in one direction, and each having a vent; a housing that accommodates the battery cells and has a top cover; and a sub cover that is provided to cover at least one portion of tops of the battery cells, and allows the battery cells and the top cover to be spaced apart from each other.

The present invention provides a sub cover for covering at least a portion of the tops of battery cells in a battery module comprising a housing that accommodates a plurality of battery cells, wherein the sub cover comprises: a base plate, a vent rib on the base plate, and a projection formed on the bottom of the sub cover to space adjacent battery cells apart and form a space between said adjacent cells.

In an embodiment of the present invention the sub cover includes a base plate, optionally, formed in an approximately rectangular shape, and an insulating rib provided on the base plate so as to form a predetermined angle 1 with the base plate at a portion contacting the housing. In an embodiment of the present invention the predetermined angle 1 is in the third direction. In a preferred embodiment the third direction is substantially along a y axis. In a preferred embodiment the predetermined angle is between 60° and 120° relative to the base plate, preferably between 80° and 100°, most preferably at 90°.

In an embodiment of the present invention the insulating rib may include a first insulating rib provided to one end of the base plate and a second insulating rib provided at the other end of the bate plate. The first insulating rib may be protruded in a first direction (d1) with respect to the base plate, and the second insulating rib may be protruded in a second direction that is a direction opposite to the first direction (d2). In an embodiment of the present invention the directions d1 and d2 are in opposite directions along an x axis.

In an embodiment of the present invention the sub cover may include a vent rib provided in parallel with the base plate around the vent.

In an embodiment of the present invention the vent rib may include a first vent rib protruded in the first direction (d1) with respect to the base plate and a second vent rib protruded in the second direction (d2) with respect to the base plate. The first and second vent ribs may be provided not to cover the vent. In an embodiment of the present invention the first and second vent ribs are provided along a z axis along the base plate. In an embodiment of the present invention the first and second vent ribs each have a concave opening. In an embodiment of the present invention the concave opening has an open side, for example the opening is a "cut-away" portion of the vent rib. In embodiments of the present invention the shape of the opening may be square, rectangular, hemi-circle, hemi-oval, a hemi-oblique straight oval or the like but is not limited thereto. Alternatively, in embodiments of the present invention the opening is provided within the first and second ribs, so that if the vent rib covers the vent portion, it is the portion of the vent rib with the opening that is over the vent portion. In this embodiment the shape of the opening is not limited and may be square, triangular, circular, rectangular, and oval or the like.

In an embodiment of the present invention the sub cover may further include a support rib. The support rib may be disposed between the vent rib and the insulating rib. The support rib may include a first support rib connected to the first vent rib and a second support rib connected to the second vent rib. In an embodiment of the present invention the first and/or second support ribs protrude in a third direction. In a preferred embodiment the third direction is substantially along a y axis.

In an embodiment of the present invention one portion of the first support rib may be protruded from the first vent rib so as to form a predetermined angle 2a with the first vent rib, and the other portion of the first support rib may be protruded from the base plate so as to form a predetermined angle 2b with the base plate. In an embodiment of the present invention the predetermined angles 2a and 2b are in the third direction. In a preferred embodiment the third direction is substantially along a y axis. In a preferred embodiment the predetermined angles 2a and 2b are each independently between 60° and 120° relative to the base plate and the vent rib, preferably between 80° and 100°, most preferably at 90°.

In an embodiment of the present invention one portion of the second support rib may be protruded from the second vent rib so as to form a predetermined angle 2c with the second vent rib, and the other portion of the second support rib may be protruded from the base plate so as to form a predetermined angle 2d with the base plate. In an embodiment of the present invention the predetermined angles 2c and 2d are in the third direction. In a preferred embodiment the third direction is substantially along a y axis. In a preferred embodiment the predetermined angles 2c and 2d are each independently between 60° and 120° relative to the base plate and the vent rib, preferably between 80° and 100°, most preferably at 90°.

In an embodiment of the present invention the one and the other portions of the first support rib may be connected to form a L' shape, and the one and the other portions of the second support rib may be connected to form a 'L' shape.

In an embodiment of the present invention the sub cover may further include a reinforcing rib. The reinforcing rib may be provided between the insulating rib and the vent rib. The reinforcing rib connects between the base plate and the support rib so as to form a predetermined angle 3 with the base plate or the support rib.

In an embodiment of the present invention the reinforcing rib may include a first reinforcing rib provided to contact the first support rib and a second reinforcing rib provided to contact the second support rib. In an embodiment of the present invention the first and/or second reinforcing ribs protrude in a third direction from the base plate. In an embodiment of the present invention the second and first reinforcing ribs protrude and in a first direction (d1) and a second direction that is a direction opposite to the first direction (d2), or vice versa, from the second and first support ribs, respectively. In a preferred embodiment the third direction is substantially along a y axis. In a preferred embodiment the first and second directions are along an x axis. Thus, the first and second support ribs can reinforce the rigidities of the first and second support ribs, respectively.

In an embodiment of the present invention one end of the first reinforcing rib may contact the first support rib so as to form a predetermined angle 3a with the first support rib, and the other end of the first reinforcing rib may contact the base plate so as to form a predetermined angle 3b with the base plate. One end of the second reinforcing rib may contact the second support rib so as to form a predetermined angle 3c with the second support rib, and the other end of the second reinforcing rib may contact the base plate so as to form a predetermined angle 3d with the base plate. In an embodiment of the present invention the predetermined angles 3b and 3d are in the third direction. In a preferred embodiment the third direction is substantially along a y axis. In a preferred embodiment the predetermined angles 3b and 3d are each independently between 60° and 120° relative to the base plate, preferably between 80° and 100°, most preferably at 90°. In an embodiment of the present invention the predetermined angles 3c and 3a are in a first direction (d1) and a second direction opposite (d2) the first direction. In a preferred embodiment the predetermined angles 3a and 3c are each independently between 60° and 120° relative to the support ribs, preferably between 80° and 100°, most preferably at 90°.

In an embodiment of the present invention the reinforcing rib may be provided with one or more reinforcing ribs at the other portion of the support rib.

In an embodiment of the present invention the sub cover may further include an anti-bending rib protruded along the long side (e.g. along the z axis) of the base plate, optionally so as to form a predetermined angle with the base plate. Thus, it is possible to prevent the base plate from being bent along the long side of the base plate.

Hooks may be provided to one and the other portion of the base plate, respectively.

In an embodiment of the present invention provided is a battery module comprising the sub cover as discussed above and a housing that can accommodate a plurality of battery cells, wherein the sub cover is interposed between tops of the battery cells and the housing so as to space the housing and battery cells apart. The housing may include a bottom cover fastened to a top cover so as to accommodate the battery cells. In an embodiment of the present invention the housing contains a plurality of battery cells and at least on through-hole portion that exposes the space formed between adjacent cells.

In an embodiment of the present invention a hook fastening portion formed at a position corresponding to the hook so as to be fastened to the hook and a through-hole portion that exposes a separate space between adjacent battery cells may be further formed in the bottom cover.

In an embodiment of the present invention the bottom cover may include a bottom cover plate in which a bottom cover fastening hole fastened to the top cover is formed, a bottom cover plate projection protruded from a bottom surface of the bottom cover plate, and a connection plate connected to an adjacent battery module.

In an embodiment of the present invention the bottom cover plate projection of the bottom cover protrudes from the bottom cover plate in a fourth direction towards the sub cover and the projection of the sub cover which protrudes from the sub cover plate in a direction opposite to fourth direction towards the bottom cover plate may be provided opposite to each other in the separate space between the adjacent battery cells. In an embodiment the fourth direction is along the y axis.

In an embodiment of the present invention provided is a battery module comprising a plurality of sub covers of the present invention, e.g. between 2 and 20, 4 and 10 or 6 and 8, the first vent rib on a sub cover in connection with the second vent rib on an adjacent sub cover forms an opening that corresponds with a vent portion of the battery module.

In an embodiment of the present invention the insulating rib has a height between 75% and 125% of the support rib may, optionally they have the same height. In an embodiment of the present invention the height of the anti-bending rib may be lower than that of the insulating rib.

In an embodiment of the present invention the thickness (e.g. the shortest dimension) of independently each of the insulating rib, the support rib, the reinforcing rib and the anti-bending rib may be formed thicker than that of the base plate.

According to the present invention, it is possible to provide a battery module in which a sub cover that allows a plurality of battery cells and a housing accommodating the battery cells to be space apart from each other at a predetermined interval is interposed between tops of the battery cells and the housing, so that it is possible to enhance the insulation property between the battery cells and the housing and the safety of the battery module.

Further, it is possible to provide a battery module in which a sub cover is interposed between tops of a plurality of battery cells and a housing accommodating the battery cells, so that it is possible to easily discharge gas or heat generated from the battery cells without using a conventional vent cover, thereby enhancing the safety and durability of the battery module.

Accordingly, the sub cover with a simple structure can be substituted for the conventional barrier between battery cells and the conventional vent cover with a complicated structure, so that it is possible to simplify the manufacturing process of the battery module and to reduce manufacturing cost.

### BRIEF DESCRIPTION OF THE DRAWINGS

The accompanying drawings, together with the specification, illustrate embodiments of the present invention, and, together with the description, serve to explain the principles of the present invention.

FIG. 1 is a perspective view of a battery module according to an embodiment of the present invention.

FIG. 2 is an exploded perspective view of FIG. 1.

FIG. 3 is a side view of FIG. 1.

FIG. 4 is a perspective view of the battery module excluding a housing according to the embodiment of the present invention.

FIG. 5 is a side view of portion A in FIG. 4.

FIG. 6A is a perspective view of a sub cover enlarged in one direction according to the embodiment of the present invention.

FIG. 6B is a perspective view of the sub cover enlarged in another direction according to the embodiment of the present invention.

### DETAILED DESCRIPTION

In the following detailed description, only certain embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements. In the drawings, the thickness or size of layers are exaggerated for clarity and not necessarily drawn to scale.

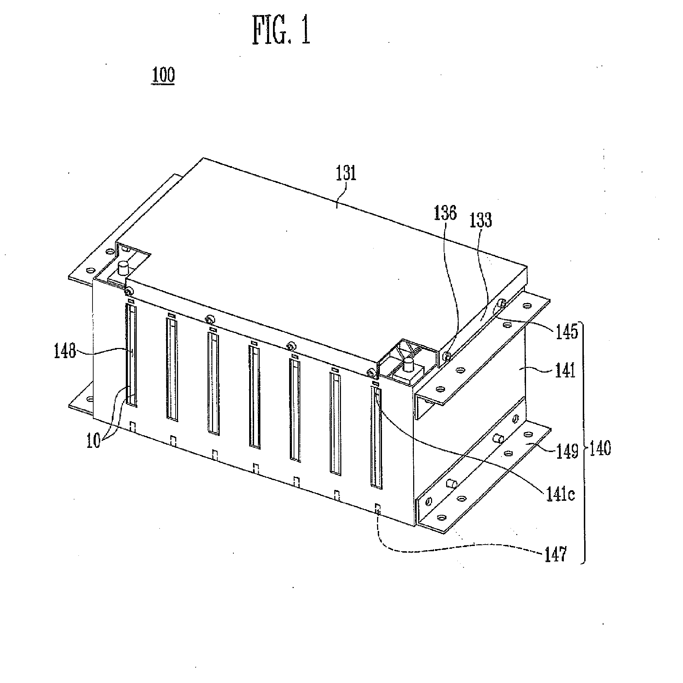

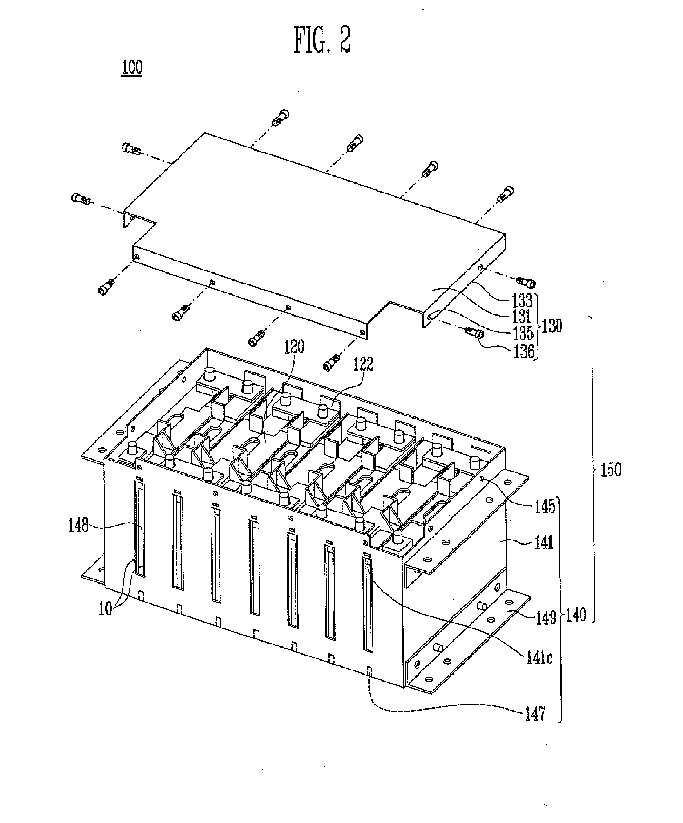

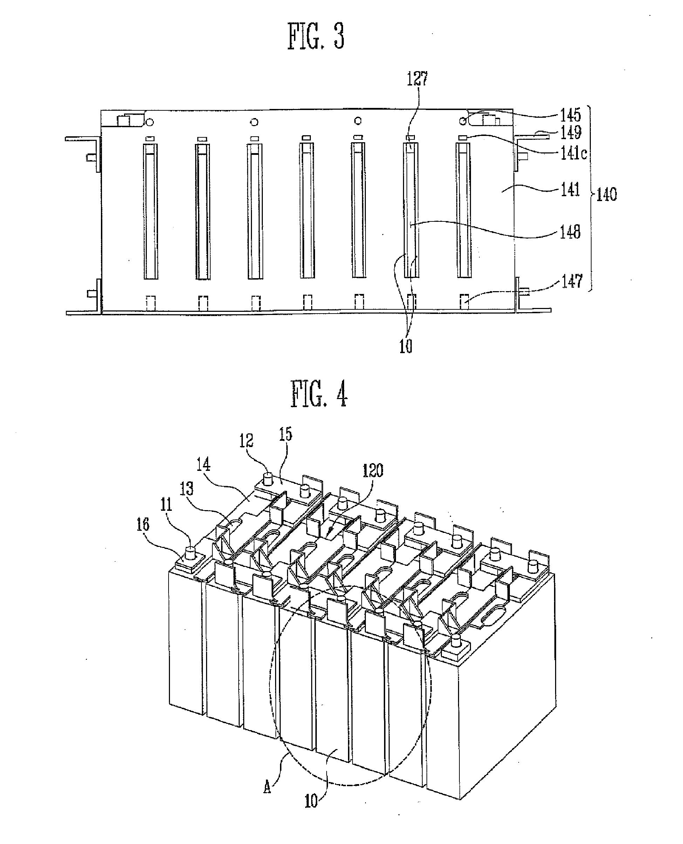

FIG. 1 is a perspective view of a battery module according to an embodiment of the present invention. FIG. 2 is an exploded perspective view of FIG. 1. FIG. 3 is a side view of FIG. 1.

Referring to FIGS. 1 and 2, the battery module 100 according to this embodiment includes two or more battery cells 10, a hosing 150 and a sub cover. The two or more battery cells 10 are arranged in one direction, and each battery cell 10 has a vent. The housing 150 accommodates the battery cells 10, and has a top cover 130. The sub cover 120 of the present invention is provided to cover at least one portion of tops of the battery cells 10, and allows the battery cell 10 and the top cover 130 to be spaced apart from each other.

Here, the housing 150 includes a bottom cover fastened to the top cover 130 so as to accommodate battery cells 10.

The top cover 130 includes a top cover plate 131 that substantially cover the top surfaces of the battery cells 10, a fastening plate 133 having a top cover fastening hole 135 formed therein so as to be fastened to the bottom cover 140, and a fastening member 136 that fastens the top and bottom covers 130 and 140 to each other. The bottom cover 140 includes a bottom cover plate 141 that substantially accommodates the battery cells 10 and having a bottom cover fastening hole 145 formed therein so as to be fastened to the top cover 130, a bottom cover plate projection 147 protruded on a bottom surface of the bottom cover plate 141, which faces the bottom surface of the battery cell 10, and a connection plate 149 connected to an adjacent battery module 100.

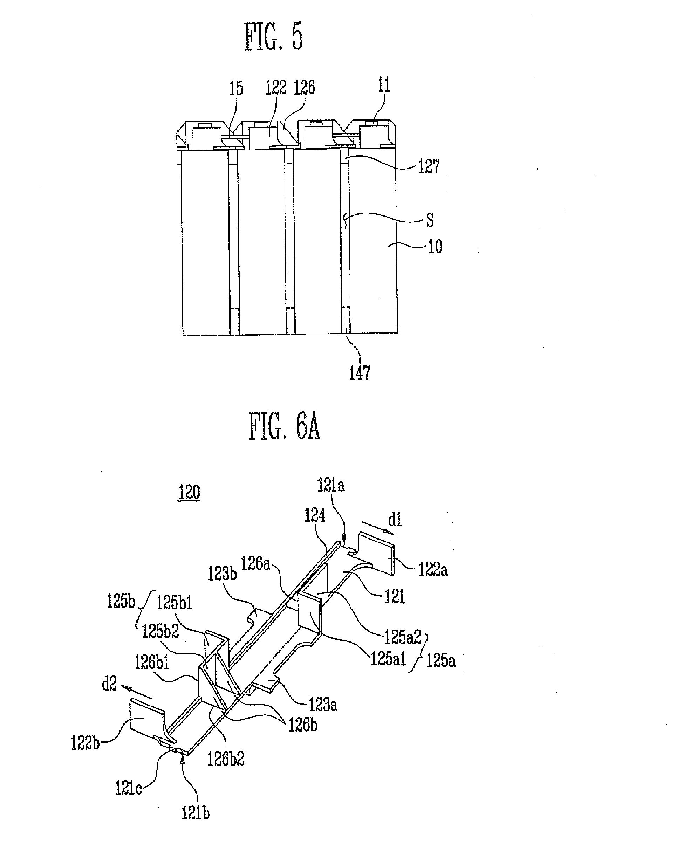

Referring to FIG. 3, a hook fastening portion 141c and a through-hole portion 148 are further formed in a side surface of the bottom cover 140, corresponding to a narrow side surface of the battery cell 10. Here, the hook fastening portion 141c is formed at a position corresponding to a hook 121c (see FIG. 6A) of the sub cover 120, which will be described later, so as to be fastened to the hook 121c, and the through-hole portion 148 exposes a separate space S (see FIG. 5) between adjacent battery cells 10. In a case where the through-hole portion 148 is formed to have a width smaller than that of the separate space S, the area through which heat generated from the battery cell 10 can be radiated becomes narrow. Therefore, the through-hole portion 148 is preferably formed to have a sufficiently large width so that a portion of the adjacent battery cell 10 is exposed or to have a width equal to that of the separate space S. The bottom cover plate projection 147 provided in the separate space S so as to allow the adjacent battery cells 10 to be spaced apart from each other is formed on a bottom surface of the bottom cover plate 141. The bottom cover plate projection 147 and a projection 127 of the sub cover 120, which will be described later, may be provided opposite to each other in the separate space S, so as to act as a barrier that allows the adjacent battery cells 10 to be spaced apart from each other.

According to this embodiment, the sub cover 120 is provided to the top of the battery cell 10. The sub cover 120 allows the battery cell 10 and the top cover 130 to be spaced apart from each other, so that gas or heat generated from the battery cell 10 can be easily discharged without a conventional vent cover.

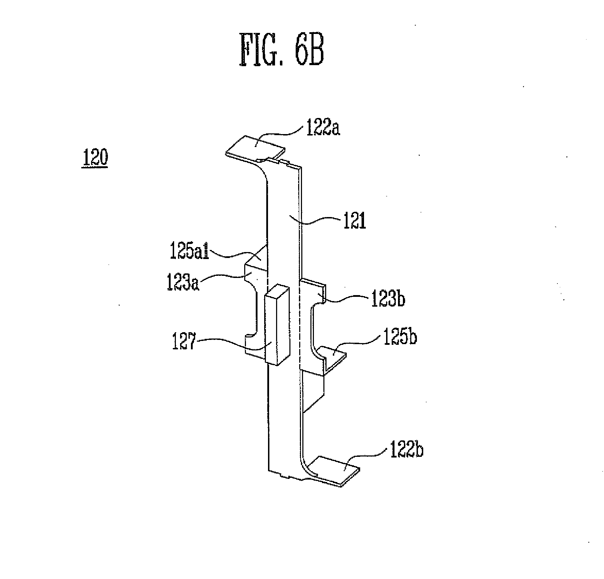

The sub cover 120 is provided with an insulating rib 122 formed at a portion contacting the bottom plate 140, so that it is possible to enhance the insulation property between the battery cell 10 and the bottom plate 140. In any embodiment of the present invention, although the sub cover 120 may be made of a polymer or plastic material having no conductivity but rigidity, the material of the sub cover 120 is not limited thereto. In an embodiment of the present invention each component is made of the same material described above. The sub cover 120 will be described later in detail with reference to FIGS. 6A and 6B.

FIG. 4 is a perspective view of the battery module excluding the housing according to the embodiment of the present invention. FIG. 5 is a side view of portion A in FIG. 4. FIG. 6A is a perspective view of the sub cover enlarged in one direction according to the embodiment of the present invention. FIG. 6B is a perspective view of the sub cover enlarged in another direction according to the embodiment of the present invention.

Referring to FIG. 4, each battery cell 10 may include a battery case having an opened portion and a cap plate 14 that seals the opened portion. The battery case may accommodate an electrode assembly and an electrolyte. Here, the electrode assembly is composed of a positive electrode plate, a negative electrode plate and a separator interposed between the electrode plates. Positive and negative electrode terminals 11 and 12 connected to the positive and negative electrode plates are protruded to outsides from both ends of the cap plate 14, respectively. The positive and negative electrode plates constituting the electrode assembly generate energy by reacting with the electrolyte, and the generated energy is provided to the outside of the battery cell 10 through the positive and negative electrode terminals 11 and 12.

In a case where the pressure of the gas generated in the battery cell 10 is a predetermined value or more, a vent portion 13 provided between the positive and negative electrode terminals 11 and 12 of the cap plate 14 may act as a passage through which the gas is exhausted from the battery cell 10. Thus, the vent portion 13 prevents the battery cell 10 from being broken by the internal pressure.

According to this embodiment, a plurality of battery cells 10 may be provided to be arranged in one direction. In this case, the battery cells 10 are arranged in parallel so that wide side surfaces of the battery cells 10 face each other. The vent portion 13 is provided at a central portion of each battery cell 10, and the vent portions 13 are disposed on an approximately straight line along the arranged battery cells 10. The positive and negative electrode terminal 12 of two adjacent battery cells 10 may be electrically connected through a bus-bar 15 formed of metal. High-current terminals 16 of both the outermost battery cells 10 are not fastened to the bus-bar 15, and high current is transferred from both the outermost battery cells 10.

Referring to FIG. 5, the separate space S may be primarily formed by adjusting the length of the bus-bar 15 that connects the positive and negative electrode terminals 11 and 12 of adjacent battery cells 10. The separate space S is formed between the adjacent battery cells 10 so that heat generated from the battery cells 10 can be more easily discharged. However, the bus-bar is fastened only at the top of the battery cell 10, and therefore, the separate space S may be unstably formed. On the other hand, according to this embodiment, the projection 127 is formed on the sub cover 120 which will be described later, so that the separate space S can be maintained. The bottom cover plate projection 147 is formed on the bottom surface of the bottom cover plate 141 so as to face the projection 127 in the separate space S, so that the separate space S can be more stably maintained.

Referring to FIGS. 5 to 6B, the sub cover 120 is provided with a base plate 121, optionally formed in an approximately rectangular shape, and an insulating rib 122 provided on the base plate 122 and formed at a portion contacting the bottom plate 140 (see FIG. 2). The insulating rib 122 is provided to form a predetermined angle (optionally approximately 90 degrees) with the base plate 121. The insulating rib 122 may be composed of a first insulating rib 122a provided at one end 121a of the base plate 121 and a second insulating rib 122b provided at the other end 121b of the base plate 121. The first insulating rib 122a may be protruded in a first direction d1 with respect to the base plate 121, and the second insulating rib 122b may be protruded in a second direction d2 that is a direction opposite by between 170 and 190 degrees, preferably 180 degrees to the first direction d1.

The sub cover 120 includes a vent rib 123 provided in parallel with the base plate 121 around the vent portion 13 (see FIG. 4). The vent rib 123 may be composed of a first vent rib 123a protruded in the first direction d1 with respect to the base plate 121 and a second vent rib 123b protruded in the second direction d2 with respect to the base plate 121. The first and second vent ribs 123a and 123b are provided not to cover the vent portion 13.

The sub cover 120 further includes a support rib 125 disposed between the vent rib 123 and the insulating rib 122. The support rib 125 is composed of a first support rib 125a connected to the first vent rib 123a and a second support rib 125b connected to the second vent rib 123b. Here, one portion 125a1 of the first support rib 125a forms a predetermined angle (optionally approximately 90 degrees) with the first vent rib 123a, and is protruded from the first vent rib 123a. The other portion 125a2 of the first support rib 125a forms a predetermined angle (optionally approximately 90 degrees) with the base plate 121, and is protruded from the base plate 121. Thus, in an embodiment of the present invention, the one and the other portions 125a1 and 125a2 of the first support rib 125a are connected to form a 'L' shape.

One portion 125b1 of the second support rib 125b forms a predetermined angle (optionally approximately 90 degrees) with the second vent rib 123b, and is protruded from the second vent rib 123b. The other portion 125b2 of the second support rib 125b forms a predetermined angle (optionally approximately 90 degrees) with the base plate 121, and is protruded from the base plate 121. Thus, in an embodiment of the present invention, the one and the other portions 125b1 and 125b2 of the second support rib 125b are connected to form a 'L' shape.

The sub cover 120 in an embodiment further includes a reinforcing rib 126. The reinforcing rib 126 is provided between the insulating rib 122 and the vent rib 123, and forms a predetermined angle (optionally approximately 90 degrees) with the base plate 121 or the support rib 125 so as to connect between the base plate 121 and the support rib 125. Here, the reinforcing rib 126 is composed of a first reinforcing rib 126a provided to contact the first support rib 125a and a second reinforcing rib 126b provided to contact the second support rib 125b. The first and second reinforcing ribs 126a and 126b function to reinforce the rigidities of the first and second support ribs 125a and 125b, respectively. One end (not shown) of the first reinforcing rib 126a contacts the first support rib 125a so as to form a predetermined angle (optionally approximately 90 degrees) with the first support rib 125a. The other end (not shown) of the first reinforcing rib 126a contacts the base plate 121 so as to form a predetermined angle (optionally approximately 90 degrees) with the base plate 121. One end 126b1 of the second reinforcing rib 126b contacts the second support rib 125b so as to form a predetermined angle (optionally approximately 90 degrees) with the second support rib 125b. The other end 126b2 of the second reinforcing rib 126b contacts the base plate 121 so as to form a predetermined angle (optionally approximately 90 degrees) with the base plate 121. As shown in FIG. 6A, in an embodiment of the present invention, the second reinforcing rib 126b may be provided so that two second reinforcing ribs are spaced apart from each other at the other portion 125b2 of the second support rib 125b. However, the present is not limited thereto, and the second reinforcing rib 126b may be provided to have various numbers and intervals.

Meanwhile, in an embodiment of the present invention, the sub cover 120 may further include an anti-bending rib 124 protruded along the long side of the base plate 121 so as to form approximately 90 degrees with the base plate. The anti-bending rib 124 can provide rigidity to the base plate 121 that may be easily bent in the direction of the long side thereof.

The hooks 121c may be provided to the one and the other ends 121a and 121b of the base plate 121, respectively. The hook 121c is fastened to the hook fastening portion 141c formed in the side surface of the bottom cover 140 (see FIG. 2), so that the sub cover 120 can be stably coupled to the housing 150.

The insulating rib 122 and the support rib 125, which are provided to the sub cover 120, are preferably formed to have the same height so that the interval between the battery cell 10 and the top cover 130 can be stably maintained. The anti-bending rib 125 provides the rigidity to the base plate 121 that may be easily bent in the direction of the long side thereof, and the height of the anti-bending rib 125 may be formed lower than that of the insulating rib 122. Meanwhile, the thicknesses of the insulating rib 122, the support rib 125, the reinforcing rib 126 and the anti-bending rib 126 may not be equally formed. However, the thickness of each of the insulating rib 122, the support rib 125, the reinforcing rib 126 and the anti-bending rib 126 is preferably formed thicker than that of the base plate 121 so that it is possible to stably maintain the interval between the battery cell 10 and the top cover 130 and to maintain the rigidity of the sub cover 120.

Referring to FIGS. 5 and 6B, the projection 127 is provided on another surface of the base plate 121 provided with the support rib 125, the reinforcing rib 126 and the anti-bending rib 126. The projection 127 provided to the sub cover 120 is provided to face the bottom cover plate projection 147 provided on the bottom surface of the bottom cover plate 141 (see FIG. 5) in the separate space S, so that the projection 127 and the bottom cover plate projection 147 can act as a barrier that allows the adjacent battery cells 10 to be spaced apart from each other. Here, the separate space S is a space formed between adjacent battery cells 10.

Since the bottom cover plate projection 147 and the projection 127 provided to the sub cover 120 can allow the adjacent battery cells 10 to be spaced apart from each other, the battery module 100 according to this embodiment enables the heat generated from the battery cells 10 to be easily discharged without using a separate barrier.

The sub cover 120 is provided to the top of the battery cell 10. The sub cover 120 allows the battery cell 10 and the top cover 130 to be spaced apart from each other, so that gas or heat generated from the battery cell 10 can be easily discharged without the conventional vent cover.

The sub cover 120 is provided with the insulating rib 122 at the portion contacting the bottom plate 140, so that it is possible to enhance the insulation property between the battery cell 10 and the bottom plate 140.

While the present invention has been described in connection with certain embodiments, it is to be understood that the invention is not limited to the disclosed embodiments, but, on the contrary, is intended to cover various modifications and equivalent arrangements included within the scope of the appended claims, and equivalents thereof.

## Claims

1. A sub cover for covering at least a portion of the tops of battery cells in a battery module comprising a housing that accommodates a plurality of battery cells, wherein the sub cover comprises:
a base plate,
a vent rib on the base plate, and
a projection formed on the bottom of the sub cover to space adjacent battery cells apart and form a space between said adjacent cells.

2. The sub cover of claim 1, wherein the vent rib includes a first vent rib protruded in the first direction with respect to the base plate and a second vent rib protruded in the second direction with respect to the base plate, optionally wherein the first and second vent ribs each have a concave opening.

3. The sub cover of claim 1 or claim 2 further comprising an insulating rib provided on the base plate so as to form a predetermined angle with the base plate at a portion contacting the housing.

4. The sub cover of claim 3, wherein the insulating rib includes a first insulating rib provided at one end of the base plate and a second insulating rib provided at the other end of the bate plate, optionally the first insulating rib protrudes in a first direction with respect to the base plate, and the second insulating rib protrudes in a second direction that is a direction opposite to the first direction.

5. The sub cover of any of claims 2 to 4 comprising a support rib, wherein the support rib includes a first support rib connected to the first vent rib and a second support rib connected to the second vent rib.

6. The sub cover of claim 5 wherein one portion of the first support rib protrudes from the first vent rib at a third direction, and the other portion of the first support rib protrudes from the base plate at a third direction.

7. The sub cover of claim 5 or claim 6, wherein one portion of the second support rib protrudes from the second vent rib at a third direction, and the other portion of the second support rib protrudes from the base plate at a third direction.

8. The sub cover of claim 6 or claim 7, wherein the one and the other portions of the first and/or second support rib are connected to form a 'L' shape.

9. The sub cover of any of claims 5 to 8, further comprising a reinforcing rib that is connected between the base plate and the support rib.

10. The sub cover of any of claims 1 to 9, further comprising an anti-bending rib protruded along one side of the base plate.

11. The sub cover of any of claims 1 to 10, further comprising a hook at each end of the base plate, wherein the hook is capable of fastening to a hook fastening portion of the housing.

12. A battery module comprising the sub cover of any of claims 1 to 11 and a housing that can accommodate a plurality of battery cells, wherein the sub cover is interposed between tops of the battery cells and the housing so as to space the housing and battery cells apart.

13. The battery module of claim 12 wherein the housing includes a bottom cover plate and a top cover and the bottom cover plate includes a bottom cover plate projection protruding from a surface of the bottom cover plate, wherein the projection formed on the bottom of the sub cover is provided to face the bottom cover plate projection provided on the surface of the bottom cover plate so as to space adjacent battery cells apart and form a space between said adjacent cells.

14. The battery module of claims 12 and 13 comprising a plurality of the sub cover of any of claims 1 to 11, wherein the first vent rib on a sub cover in connection with the second vent rib on an adjacent sub cover forms an opening that corresponds with a vent portion.

15. The battery module of any of claims 12 to 14 wherein the housing contains at least on through-hole portion that exposes the space formed between adjacent cells.
